# EUROPEAN PATENT APPLICATION

(11) **EP 3 798 251 A1**
(43) Date of publication of application: **31.03.2021**
(21) Application number: 19806645.8
(22) Date of filing: 13.05.2019
(51) Int. Cl.: C08G 75/045

(54) **THIOL-ENE CURABLE COMPOSITION**

(30) Priority: 22.05.2018 JP 2018097729
(71) Applicant: Showa Denko K.K., Tokyo 105-8518 (JP)
(72) Inventor: ONISHI Mina, Tokyo 105-8518 (JP)
(74) Representative: Strehl Schübel-Hopf & Partner
(86) International application number: PCT/JP2019/018921
(87) International publication number: WO 2019/225377

(57) **Abstract**

To provide a thiol-ene curable composition which achieves both sufficient elongation properties and elasticity, and ensures the preservation stability of a formulation.

The thiol-ene curable composition includes a compound (A) having an isocyanuric skeleton and at least two mercapto groups in one molecule, and at least one of a compound (B) including diallyl maleate and diallyl fumarate.

The compound (A) is at least one selected from 1,3,5-tris(3-mercaptobutyryloxyethyl)-1,3,5-triazine-2,4,6(1H,3H,5H)-trione, tris-[(3-mercaptopropionyloxy)-ethyl]-isocyanurate, and tris(mercaptopropyl)isocyanurate.

## Description

### Technical Field

The present invention relates to a thiol-ene curable composition and a cured product thereof, wherein a cured product having high elongation properties and elasticity is obtainable, with good preservation stability of a formulation.

### Background Art

The reaction of a thiol compound with a carbon-carbon double bond compound is known as a thiol-ene reaction, and academic general remarks thereof are reported in Non-Patent Literature 1.

When the carbon-carbon double bond compound is a (meth)allyl compound, the carbon-carbon double bond compound and the thiol compound are reacted in a functional group molar ratio of about 1 : 1 to form a thioether bond, and thereby a cured product provided with a uniform functionality is obtained. Such cured product is also known to be hardly susceptible to oxygen inhibition, and attention is focused on the excellent productivity, as well as high elongation properties and transparency.

Patent Literature 1 discloses a thermosetting type composition utilizing a thiol-ene reaction by a thermal polymerization initiator, wherein described is the applicability to fields such as coating agents e.g. paint, molding materials, adhesives, and ink. Patent Literature 1 describes a thiol-ene cured product utilizing a copolymer compound of a (meth)acrylate compound and a primary thiol compound; however, when utilizing the (meth)acrylate compound, since the homopolymerization of (meth)acryl group *per se* advances together with the thiol-ene reaction, a uniform composition is not obtained, and thus there are insufficiencies in the elasticity and elongation properties of the cured product.

Patent Literature 2 describes a photocurable resin composition for a lens sheet, providing a technical disclosure of a thiol-ene cured product by an allyl compound and a primary thiol compound, where a compound having a carbon-carbon double bond at the molecular terminal is utilized in the examples. When such ene-compounds are utilized, there has been a difficulty in producing a cured product which could achieve both sufficient elongation properties and preservation stability.

Patent Literature 3 describes a photocurable composition including a secondary or tertiary thiol compound and an allyl-based monomer, wherein attention is focused on the curing rate (quick drying property). When such ene-compounds are utilized, although sufficient preservation stability can be ensured, the elasticity is low, and thus there has been a difficulty in employing the above compounds in applications where durability is demanded.

### Citation List

### Patent Literature

Patent Literature 1: JP 2004-277660 A
Patent Literature 2: JP 2000-102933 A
Patent Literature 3: JP 2017-206572 A

### Non Patent Literature

Non Patent Literature 1: Charles E. Hoyle and Christopher N. Bowman., Angew. Chem. Int. Ed. (2010) Vol. 49, pp. 1540-1573

### Summary of Invention

### Technical Problem

The present invention was made in light of the above problems, and aims to provide a thiol-ene curable composition which achieves both sufficient elongation properties and elasticity and ensures the preservation stability of a formulation, by selecting a specific thiol compound and ene compound.

### Solution to Problem

As a result of keen investigation, the present inventors found that by utilizing a thiol-ene curable composition characterized by comprising a compound having at least two mercapto groups and an isocyanuric skeleton in one molecule as a thiol compound, and at least one of diallyl maleate and diallyl fumarate, a cured product with excellent elongation properties and elasticity is obtainable, and that preservation stability of a formulation is ensured, thereby the present invention has been completed.

Namely, the present invention relates to the following matters.
[1] A thiol-ene curable composition comprising a compound (A) having an isocyanuric skeleton and at least two mercapto groups in one molecule, and at least one of a compound (B) including diallyl maleate and diallyl fumarate.
[2] The thiol-ene curable composition of [1], wherein the compound (A) is at least one selected from 1,3,5-tris(3-mercaptobutyryloxyethyl)-1,3,5-triazine-2,4,6(1H,3H,5H)-trione, tris-[(3-mercaptopropionyloxy)-ethyl]-isocyanurate, and tris(mercaptopropyl)isocyanurate.
[3] The thiol-ene curable composition of [1], wherein the compound (A) contains the group shown by the following formula (1): 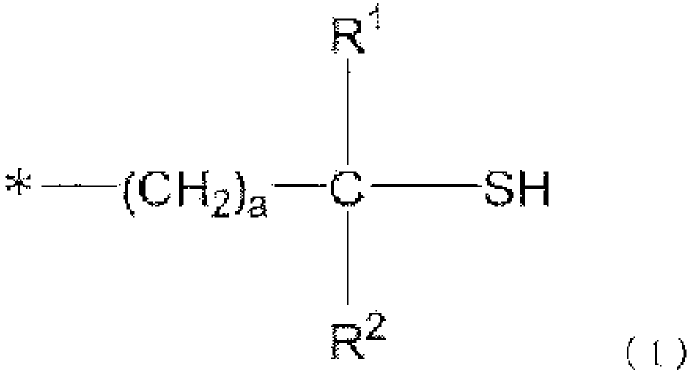 in Formula (1), the * symbol represents a bonding point, R¹ represents an alkyl group having 1 to 10 carbon atoms, and R² is a hydrogen atom or an alkyl group having of 1 to 10 carbon atoms. a is an integer from 0 to 2.
[4] The thiol-ene curable composition of [1] to [3], wherein the ratio of the number of the mercapto groups of the compound (A) and the total number of carbon-carbon unsaturated bonds of the compound (B) (the number of mercapto groups / the number of unsaturated bond groups) is within the range of 0.2 to 2.
[5] The thiol-ene curable composition of [1] to [4], comprising 0.01 to 10 % by weight of a polymerization initiator (C) to the total amount of the thiol-ene curable composition.
[6] The thiol-ene curable composition of [1] to [5], further comprising a radical reactive compound (D).
[7] A cured product of the thiol-ene curable composition of [1] to [6].

### Advantageous Effects of Invention

The thiol-ene curable composition of the present invention can be easily cured in a short time by active energy ray irradiation when using a photopolymerization initiator. The thiol-ene curable composition is useful as a protective material since it has excellent elongation properties and elasticity, and can also be utilized as a mold casting material, a paint, a molding material and the like in various industries.

### Description of Embodiments

The thiol-ene curable composition of the present invention (hereinunder simply referred to as "the composition of the present invention") is characterized by comprising a compound (A) having an isocyanuric skeleton and at least two mercapto groups in one molecule, and at least one of a compound (B) including diallyl maleate and diallyl fumarate. The constituent components of the composition of the present invention are explained below.

### <Compound (A)>

The compound (A), which is an essential component of the present invention and has an isocyanuric skeleton and at least two mercapto groups in one molecule (hereinunder referred to as "compound (A)"), is explained. The isocyanuric skeleton has the following structure. Here, the * symbol represents a bonding point.

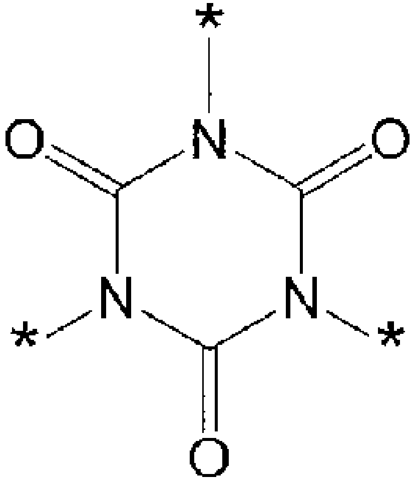

A compound having 2 to 6 mercapto groups in one molecule is preferable as the compound (A). Examples thereof include esters of a mercapto group-containing carboxylic acid and a polyhydric alcohol having an isocyanuric skeleton. One of these, or two or more of these, can be utilized.

Examples of the mercapto group-containing carboxylic acid in the esters of a mercapto group-containing carboxylic acid and polyhydric alcohol include thioglycolic acid, 2-mercaptopropionic acid, 3-mercaptopropionic acid, 2-mercaptobutanoic acid, 3-mercaptobutanoic acid, 4-mercaptobutanoic acid, 2-mercaptoisobutanoic acid, 2-mercaptoisopentanoic acid, 3-mercaptoisopentanoic acid, 3-mercaptoisohexanoic acid and the like. Also, the polyhydric alcohol in the esters of a mercapto group-containing carboxylic acid and a polyhydric alcohol may be straight or ring-shaped (aliphatic ring, aromatic ring, heterocyclic ring), and examples thereof include tris(2-hydroxyethyl)isocyanurate. In the present invention, a compound having an isocyanuric skeleton is utilized as the compound (A). Therefore, amongst the polyhydric alcohols, a combination of the esters of the mercapto group-containing carboxylic acid and tris(2-hydroxyethyl)isocyanurate is especially preferable because tris(2-hydroxyethyl)isocyanurate greatly contributes to the elongation properties and elasticity of the cured product of the thiol-ene curable composition of the present invention, from the perspective of the number of functional groups and skeleton rigidity.

As the compound (A), the esters of the mercapto group-containing carboxylic acid and tris(2-hydroxyethyl)isocyanurate are easily obtainable as commercially available products, where 1,3,5-tris(3-mercaptobutyryloxyethyl)-1,3,5-triazine-2,4,6(1H,3H,5H)-trione (brand name: Karenz MT NR1, made by Showa Denko K.K.), tris-[(3-mercaptopropionyloxy)-ethyl]-isocyanurate (brand name: TEMPIC, made by SC Organic Chemical Co., Ltd.) and the like can be mentioned.

Furthermore, as the compound (A), a compound having an isocyanuric skeleton is utilized, where tris(mercaptopropyl)isocyanurate is preferably utilized, from the perspective of elongation properties and elasticity of the cured product of the thiol-ene curable composition of the present invention.

For the preservation stability of a formulation, compounds in which all mercapto groups are bonded to a secondary carbon atom or a tertiary carbon atom are preferable. Compounds in which mercapto groups are bonded to a secondary carbon atom or a tertiary carbon atom are superior to the stability of compounds where mercapto groups are bonded to a primary carbon atom in terms of the stability of a formulation, and thus are accordingly superior also in the practical use. Namely, it is preferable for the compound (A) to have a mercapto group-containing group where a substituent is bonded to the carbon atom at the α-position with respect to a mercapto group, and to have two or more mercapto groups. At least one of the substituents is preferably an alkyl group. In the same way, it is also preferable for the other of the two mercapto groups to constitute a substituent bonded to a secondary carbon atom or a tertiary carbon atom.

The description stating that a substituent is bonded to the carbon atom at the α-position with respect to a mercapto group means that the carbon at the α-position of the mercapto group is bonded to two or three carbon atoms. The description stating that at least one of the substituents is an alkyl group means that, amongst the groups bonded to the carbon atom at the α-position with respect to a mercapto group, at least one of the groups other than the main chain is an alkyl group. Here, the main chain means the structural site of the longest chain, amongst the structural sites other than the mercapto group and hydrogen atom, which is bonded to the carbon atom at the α-position. The group shown by the following formula (a-1) is preferable as the mercapto group-containing group.

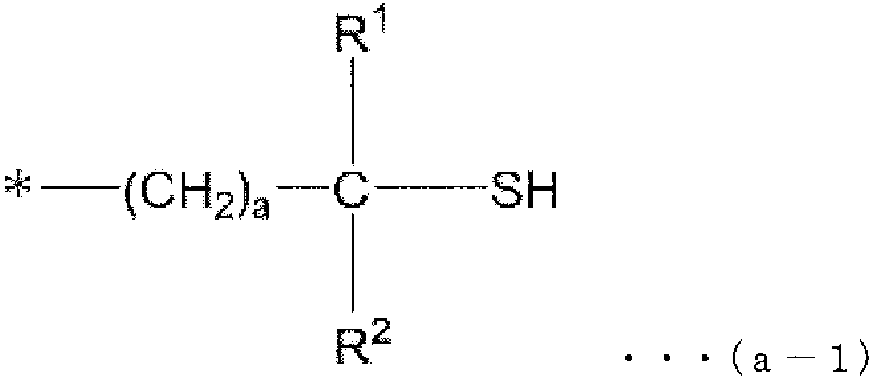

In Formula (a-1), the * symbol represents a bonding point, R¹ is an alkyl group having 1 to 10 carbon atoms, and R² is a hydrogen atom or an alkyl group having 1 to 10 carbon atoms. a is an integer from 0 to 2.

The alkyl group having 1 to 10 carbon atoms represented by R¹ and R² may be straight or branched, where e.g. methyl, ethyl, n-propyl, iso-propyl, n-butyl, iso-butyl, tert-butyl, n-hexyl, n-octyl and the like can be mentioned, and methyl or ethyl is preferable.

The compound (A) is preferably at least one selected from 1,3,5-tris(3-mercaptobutyryloxyethyl)-1,3,5-triazine-2,4,6(1H,3H,5H)-trione, tris-[(3-mercaptopropionyloxy)-ethyl]-isocyanurate, and tris(mercaptopropyl)isocyanurate.

From the perspective of elongation properties and elasticity of the cured product of the thiol-ene curable composition of the present invention, and also taking into account the preservation stability of a formulation, 1,3,5-tris(3-mercaptobutyryloxyethyl)-1,3,5-triazine-2,4,6(1H,3H,5H)-trione is especially preferably utilized.

A compound having at least two mercapto groups and having no isocyanuric skeleton in one molecule may be formulated in the composition of the present invention, within the scope which does not impair the effect of the invention (hereinunder referred to as "compound (a)").

Examples of the compound (a) include aliphatic polythiols and aromatic polythiols such as alkanedithiols having about 2 to 20 carbon atoms, esters of a mercapto group-containing carboxylic acid and polyhydric alcohol, polythiols in which a halogen atom of a halohydrin addition product of alcohols is substituted with a thiol group, and polythiols consisting of a hydrogen sulfide reaction product of a polyepoxide compound (hereinunder referred to as "other polythiols").

Examples of the aliphatic polythiols and aromatic polythiols include ethanedithiol, propanedithiol, butanedithiol, hexamethylenedithiol, decamethylenedithiol, tolylene-2,4-dithiol, xylenedithiol and the likes.

Examples of the mercapto group-containing carboxylic acid in the esters of a mercapto group-containing carboxylic acid and polyhydric alcohol include thioglycolic acid, 2-mercaptopropionic acid, 3-mercaptopropionic acid, 2-mercaptobutanoic acid, 3-mercaptobutanoic acid, 4-mercaptobutanoic acid, 2-mercaptoisobutanoic acid, 2-mercaptoisopentanoic acid, 3-mercaptoisopentanoic acid, 3-mercaptoisohexanoic acid and the like. Examples of the polyhydric alcohol include ethylene glycol, propylene glycol, 1,4-butanediol, 1,6-hexanediol, trimethylolpropane, ditrimethylolpropane, pentaerythritol, and dipentaerythritol.

Examples of the esters of a mercapto group-containing carboxylic acid and polyhydric alcohol include 1,4-bis(3-mercaptobutyryloxy)butane, trimethylolpropane tris(3-mercaptopropionate), pentaerythritol tetrakis(3-mercaptopropionate) and the like.

Examples of the other polythiols include triglycol dimercaptan, diglycol dimercaptan, polyoxypropylene glycol dimercaptan and the like.

The amount of the compound (a) is preferably 20 % by weight or lower with respect to the total amount of mercapto compounds, from the perspective of curability, or preservation stability, odor and the like of a formulation.

Here, the preservation stability of a formulation means that after a formulation is left to stand overnight at room temperature, no change is observed in the external appearance. If preservation stability is poor, the composition is solidified, or components with different refractive indexes are partially formed while the composition remains in a liquid state. If curing with such composition in which components with different refractive indexes are partially formed while the composition remains in a liquid state, strength cannot be expected since the curing would be non-uniform.

### <Diallyl maleate and diallyl fumarate (compound (B))>

Diallyl maleate and diallyl fumarate, an essential component of the present invention, will be explained (hereinunder referred to as "compound (B)").

Diallyl maleate and diallyl fumarate are characterized by comprising a carbon-carbon unsaturated bond in a molecular chain and at a molecular terminal. If the carbon-carbon unsaturated group at the molecular terminal is an allyl group, then a one-to-one reaction with the mercapto group occurs, and hence it is especially preferable.

In diallyl fumarate and diallyl maleate, the carbon-carbon unsaturated bond at a molecular terminal is an allyl group, which is also especially preferable from the viewpoint of being easily obtainable. Diallyl fumarate in particular is further preferable because the reactivity of carbon-carbon unsaturated bond in a molecular chain and an allyl group are both high, and thus homogeneous crosslinking can be formed.

Either one of diallyl fumarate and diallyl maleate can be utilized, or both may be utilized.

In the composition of the present invention, the ratio (a/b) of the number of mercapto groups (a) of the compound (A) and the number of carbon-carbon unsaturated bonds (b) of the compound (B) is preferably 0.2 to 2, and more preferably 0.25 to 1.5, from the perspective of curability.

When formulating according to such ratios, the resultant cured product can achieve both high elongation properties and high elasticity. Here, the elongation properties and elasticity indicate the elongation rate and initial elastic modulus during breaking, when conducting a tensile test on a cured product of the composition of the present invention, which was obtained such that the film thickness is 0.5 mm, cut into short strips of 10 mm width, in a 23 °C environment, with a 30 mm distance between chucks, at a speed of 30 mm/min. Usually the obtaining *per se* of a cured product using a photocuring material with an elongation rate of 100 % or more is difficult, where it is often the case that cured products with high elongation properties exceeding an elongation rate of 100 % have an elastic modulus of 10 MPa or lower. Moreover, very rigid cured products with an elastic modulus of 1000 MPa or more usually have an elongation rate of less than 40 %, where an elongation rate exceeding 40 % is not obtainable. The thiol-ene curable composition of the present invention can provide a cured product showing an elastic modulus of 20 MPa or more even with an elongation rate of 100 % or more, or a cured product with an elongation rate of 50 % or more even if the elastic modulus is 1000 MPa or more.

Moreover, in addition to the compound (B), a compound (b) having a carbon-carbon unsaturated bond in a molecular chain and at a molecular terminal may be formulated. For example, 1,4,7-octatriene-3,6-dione, 3,8-nonadiene-2,5-dione, 3,9-decadiene-2,5-dione, 3-hexene-2,5-dione, 3,8,10-undecatriene-2,5-dione, 1-butyl-4-(2-propene-1-yl) ester, 1-methylethyl-2-propenyl ester, 1-(3-butene-1-yl)4-ethyl ester, 1-(1-methyl-2-nitroethyl)4-(2-propene-1-yl) ester, 3-butene dodecyl ester, ethyl 2-methyl-2-propenyl ester, 3-butene pentyl ester, octadecyl 2-propenyl ester and the like are exemplified as a compound having a carbon-carbon unsaturated bond in a molecular chain and at one molecular terminal (compound (b1)).

Moreover, 1,4-di-2-propene-1-yl ester, 1,4-bis(2-methyl-2-propene-1-yl) ester, di-3-butenyl ester, 1,4-(di-10-undecene-1-yl) ester, 1,4-(di-9-octadecane-1-yl) ester, 1,4-bis(1,1-dimethyl-2-propene-1-yl) ester, poly[oxy(1-methyl-2-oxo-1,2-ethanediyl)], bis(1-methylene-2-propenyl) ester and the like are exemplified as a compound having a carbon-carbon unsaturated bond in a molecular chain and at two molecular terminals (compound (b2)).

If the compound (b) is included together with the compound (B), the ratio of the number of carbon-carbon unsaturated bond of the compound (b) to be contained in the total number of carbon-carbon unsaturated bonds of the compound (B) and carbon-carbon unsaturated bonds of the compound (b) is preferably 1 to 50 %, and preferably 5 to 25 %.

### <Polymerization initiator (C)>

The polymerization initiator (C) includes a photopolymerization initiator and a thermal polymerization initiator. In the present invention, it is preferable that both are radical polymerization initiators, and any compounds may be utilized if the compounds generate radicals capable of radical polymerization through active energy rays and/or heat, and radicalize the compound (A) to promote a reaction with the compound (B). The polymerization initiator according to JP 5302688 B2, for example, may be utilized. The polymerization initiator (C) may be utilized alone, or in combination of two or more kinds.

A photopolymerization initiator and a thermal polymerization initiator may each be utilized alone; however, from the perspective of quick curability and less environmental burden, it is preferable that the polymerization initiator (C) includes a photopolymerization initiator. When carrying out a combined type of polymerization, such as curing by irradiation of active energy rays as well as curing by heat, a photopolymerization initiator and a thermal polymerization initiator may be used in combination.

There is no particular limitation on the type of photopolymerization initiator as long as it is sensitive to irradiated active energy rays. Examples of the active energy rays include particle beams and electromagnetic waves such as near infrared rays, visible light rays, ultraviolet rays, vacuum ultraviolet rays, X-rays, γ-rays, and electron beams.

Examples of a photopolymerization initiator which is sensitive to the irradiation of visible light rays or ultraviolet rays include acetophenone or derivatives thereof, such as acetophenone, diethoxyacetophenone, and 2-hydroxy-2-methyl-1-phenylpropan-1-one (e.g. Darocur 1173 made by BASF) .

Furthermore, examples of a photopolymerization initiator which is sensitive to the irradiation of visible light rays or ultraviolet rays include benzophenone or derivatives thereof, such as benzophenone, 4,4'-bis(dimethylamino)benzophenone, 4,4'-bis(diethylamino)benzophenone, and 4-trimethylsilylbenzophenone; or benzoin or derivatives thereof, such as benzoin, benzoin ethyl ether, benzoin propyl ether, benzoin isobutyl ether, and benzoin isopropyl ether.

As a photopolymerization initiator which is sensitive to the irradiation of visible light rays or ultraviolet rays, methyl phenylglyoxylate, benzoin dimethyl ketal, and ethyl(2,4,6-trimethylbenzoyl)phenylphosphinate (e.g. Irgacure TPO-L made by BASF) and the like may be mentioned. Moreover, bisacylphosphine oxide compounds such as bis(2,4,6-trimethylbenzoyl)phenylphosphine oxide and bis(2,6-dichlorobenzoyl)-phenylphosphine oxide; and acylphosphine oxide compounds such as 2,4,6-trimethylbenzoyl-diphenylphosphine oxide and 2,4,6-trimethoxybenzoyl-diphenylphosphine oxide, and the like can also be mentioned.

As an especially preferable photopolymerization initiator, diphenyl-2,4,6-trimethylbenzoyl phosphine oxide, 2-hydroxy-2-methylpropiophenone, 2-hydroxy-1-(4-isopropenylphenyl)-2-methylpropan-1-one and oligomers thereof, and 2,4,6-trimethylbenzophenone can be mentioned, where the brand name "ESACURE KTO 46" made by LAMBERTI S.p.A., which is a mixture of these compounds, is preferably usable.

Furthermore, titanocene compounds such as bis(η5-2,4-cyclopentadiene-1-yl)-bis[2,6-difluoro-3-(1H-pyrrole-1-yl) phenyl]titanium; thioxanthones such as 2,4-diethyl thioxanthone, 2-isopropyl thioxanthone, and 2-chloro thioxanthone; methyl phenylglyoxylate; benzoin dimethyl ketal; p-dimethylamino benzoic acid isoamyl; p-dimethylaminobenzoic acid ethyl; and the like can also be mentioned as a photopolymerization initiator which is sensitive to the irradiation of visible light rays or ultraviolet rays.

Compounds (e.g. p-dimethylaminobenzoic acid isoamyl, p-dimethylaminobenzoic acid ethyl) which are generally called photopolymerization promoters, and which have an excellent promoting function with respect to hydrogen abstraction type photopolymerization initiators (e.g. benzophenone-based, thioxanthone-based) will also be defined as compounds included in the photopolymerization initiator in the present invention.

Amongst these photopolymerization initiators, preferable are acylphosphine oxide compound, bisacylphosphine oxide compound, 2-methyl-1-[4-(methylthio)phenyl]-2-morpholinopropan-1-one, 2-benzyl-2-methylamino-1-(4-morpholinophenyl)butanone-1, 2,2-dimethoxy-1,2-diphenylethan-1-one, and 1-hydroxycyclohexyl phenyl ketone. Particularly preferable are 2,4,6-trimethylbenzoyl-diphenylphosphine oxide, 2,4,6-trimethoxybenzoyl-diphenylphosphine oxide, and 1-hydroxycyclohexyl phenyl ketone.

Although there is no particular limitation on the types of thermal polymerization initiators, e.g. organic peroxide, azo compounds and the like can be mentioned. As the organic peroxide, e.g. dialkyl peroxide, acyl peroxide, hydro peroxide, ketone peroxide, peroxy ester and the like may be utilized. Specific examples thereof include diisobutyryl peroxide and cumyl peroxyneodecanoate. Moreover, examples of the azo compound include 2,2'-azobis(4-methoxy-2,4-dimethylvaleronitrile) and 2,2'-azobis(2,4-dimethylvaleronitrile).

The content of the polymerization initiator (C) in the thiol-ene curable composition of the present embodiment is preferably 0.01 parts by weight or more and 10 parts by weight or less, more preferably 0.1 parts by weight or more and 10 parts by weight or less, further preferably 0.3 parts by weight or more and 7 parts by weight or less, and especially preferably 0.4 parts by weight or more and 3 parts by weight or less, when the amount obtained by subtracting the amounts of the polymerization initiator (C) and the components which do not contribute to the reaction such as non-reactive solvents, inorganic fillers and pigments, from the total amount of the thiol-ene curable composition is taken as 100 parts by weight.

Alternatively, it is preferable to contain 0.01 to 10 % by weight, more preferably 0.1 % by weight or more and 10 % by weight or lower, further preferably 0.3 % by weight or more and 7 % by weight or lower, and especially preferably 0.4 % by weight or more and 3 % by weight or lower of the polymerization initiator (C) with respect to the total amount of thiol-ene curable composition. If the content of the polymerization initiator (C) is within the numerical value range, a sufficient curing rate is obtainable, and the mechanical strength of the cured product is increased.

For example, if the thiol-ene curable composition of the present embodiment comprises the compound (A), the compound (B) and the polymerization initiator (C), the content of the polymerization initiator (C) is preferably 0.01 parts by weight or more and 10 parts by weight or less, when the total amount of the compound (A) and diallyl maleate and/or diallyl fumarate is taken as 100 parts by weight.

Moreover, if the thiol-ene curable composition of the present embodiment comprises, for example, the compound (A), the compound (a), the compound (B), the compound (b), the polymerization initiator (C), and the below-mentioned radical reactive compound (D), the content of the polymerization initiator (C) is preferably 0.01 parts by weight or more and 10 parts by weight or less, when the total amount of the compound (A), the compound (a), the compound (B), the compound (b), and the radical reactive compound (D) is taken as 100 parts by weight.

### <Radical reactive compound (D)>

The curable composition of the present embodiment may contain a radical reactive compound (D), with the objective of improving various physical properties and adjusting viscosity. The radical reactive compound (D) is a compound that is other than the compound (A), the compound (a), the compound (B), and the compound (b), that is capable of a radical reaction such as a radical polymerization reaction or a radical crosslink reaction, and that has an ethylenically unsaturated bond. These may be a monomer or an oligomer. The radical reactive compound (D) includes a (meth)allyl group-containing compound (D-1) and a (meth)acryloyl group-containing compound (D-2).

In the present specification, "(meth)allyl" means methallyl (namely 2-methyl-2-propenyl) and/or allyl (namely 2-propenyl). Moreover, "(meth)acrylate" means methacrylate and/or acrylate, and "(meth)acryl" means methacryl and/or acryl.

The (meth)allyl group-containing compound (D-1) preferably has two or more (meth)allyl groups in one molecule, and from the perspective of viscosity, is preferably a compound with a number average molecular weight of 200 or more and 20000 or less. A compound having no carbon-carbon unsaturated bonds in a molecular chain is utilized as the (meth)allyl group-containing compound (D-1).

If the (meth)allyl group-containing compound (D-1) is a monomer, examples thereof include compounds having an aromatic ring structure such as di(meth)allyl phthalate, di(meth)allyl isophthalate, di(meth)allyl terephthalate, tri(meth)allyl trimellitate, and tetra(meth)allyl pyromellitate; compounds having an alicyclic structure such as di(meth)allyl 1,2-cyclohexane dicarboxylate, di(meth)allyl 1,3-cyclohexane dicarboxylate, and di(meth)allyl 1,4-cyclohexane dicarboxylate; N-(meth)allyl group-containing compounds such as tri(meth)allyl isocyanurate and tri(meth)allyl cyanurate; (meth)allyl ether compounds such as bisphenol A di(meth)allyl ether; diethylene glycol bis((meth)allyl carbonate); tetra(meth)allyl 1,2,3,4-butanetetra carboxylate; di(meth)allyl succinate; di(meth)allyl glutarate; di(meth)allyl adipate; di(meth)allyl sebacate; di(meth)allyl dimerate; hydrogenated di(meth)allyl dimerate; di(meth)allyl 1,12-dodecanedioate; di(meth)allyl itaconate; trimethylolpropane di(meth)allyl ether; pentaerythritol tri(meth)allyl ether; trimethylolpropane tri(meth)allyl ether; pentaerythritol tetra (meth)allyl ether; and the like.

If the (meth)allyl group-containing compound (D-1) is an oligomer, examples of the (meth)allyl group-containing compound (D-1) include a (meth)allyl ester resin. The (meth)allyl ester resin is a compound having a (meth) allyloxycarbonyl group at a molecular terminal and a repeating unit in a molecule. For example, it is a compound produced by various reactions such as: an ester exchange reaction of a (meth)allyl ester compound of a polybasic acid with a polyhydric alcohol; a condensation reaction of a monool including (meth)allyl alcohol or a polyhydric alcohol with at least one selected from a polybasic acid and a polybasic acid anhydride; an ester exchange reaction of a polyol having a repeating unit with a (meth)allyl ester compound of a polybasic acid; and a condensation reaction of a monool including a (meth)allyl alcohol or a polyol having a repeating unit with at least one selected from a polybasic acid and a polybasic acid anhydride.

If the (meth)allyl group-containing compound (D-1) is an oligomer, specific examples thereof other than the (meth)allyl ester resin include a polyene compound derived from substituted or unsubstituted allyl alcohol, polyethylene glycol bis(allyl carbonate) and the like.

If the (meth)allyl group-containing compound (D-1) is a polymer, the polymer skeleton may be a polyethylene skeleton, a polyurethane skeleton, a polyester skeleton, a polyamide skeleton, a polyimide skeleton, a polyoxyalkylene skeleton, or a polyphenylene skeleton.

The (meth)allyl group-containing compound (D-1) may be utilized alone, or in combination of two or more kinds. The (meth)acryloyl group-containing compound (D-2) is not particularly limited as long as the compound contains a (meth)acryloyl group. Examples thereof include an epoxy (meth)acrylate, a (poly)ester (meth)acrylate, a (poly)carbonate (meth)acrylate, a hydrogenated polybutadiene (meth)acrylate, a (poly)ether (meth)acrylate, and a (poly)urethane (meth)acrylate.

The (meth)acryloyl group-containing compound (D-2) is preferably a compound having two or more (meth)acryloyl groups, from the perspective of curability. The epoxy (meth)acrylate means general compounds obtained by reacting an epoxy resin having an epoxy group with a monocarboxylic acid having a (meth)acryloyl group. The epoxy resin is preferably a compound having two or more epoxy groups in one molecule, and specifically includes bisphenol type epoxy resins such as bisphenol A epoxy resin, bisphenol F epoxy resin, bisphenol S epoxy resin, bisphenol AD epoxy resin, hydrogenated bisphenol A epoxy resin, hydrogenated bisphenol F epoxy resin, hydrogenated bisphenol S epoxy resin, hydrogenated bisphenol AD epoxy resin, and tetra bromo bisphenol A epoxy resin.

Moreover, novolac type epoxy resins such as ortho-cresol novolac epoxy resin, phenol novolac epoxy resin, naphthol novolac epoxy resin, bisphenol A novolac epoxy resin, brominated phenol novolac epoxy resin, alkyl phenol novolac epoxy resin, bisphenol S novolac epoxy resin, methoxy group-containing novolac epoxy resin, brominated phenol novolac epoxy resin and the like can also be mentioned.

In addition, phenol aralkyl type epoxy resin (commonly called an epoxidized material of a Xylok resin); bifunctional type epoxy resins such as resorcinol diglycidyl ether, hydroquinone diglycidyl ether, catechol diglycidyl ether, biphenyl epoxy resin, and tetramethyl biphenyl type epoxy resin; triglycidyl isocyanurate; triphenylmethane type epoxy resin; tetraphenylethane type epoxy resin; dicyclopentadiene-phenol addition reaction type epoxy resin; biphenyl modified novolac epoxy resin (epoxidized material of a polyhydric phenol resin where phenol nucleuses are linked by a bismethylene group); methoxy group-containing phenol aralkyl resin; and the like can be mentioned.

Epoxy (meth)acrylates are also easily obtainable as a commercially available product. Examples of commercially available epoxy (meth)acrylates include VR-77 made by Showa Denko K.K.; EPOXY ESTER 40EM, EPOXY ESTER 30002M, EPOXY ESTER 3002A, EPOXY ESTER 3000MK, and EPOXY ESTER 3000A made by Kyoeisha Chemical Co., Ltd.; EBECRYL 600, EBECRYL 648, and EBECRYL 3700 made by DAICEL-ALLNEX LTD.

A (poly)ester (meth)acrylate means a compound having one or more ester bonds other than a (meth)acryloyloxy group, and having one or more (meth)acrylate groups.

(Poly)ester (meth)acrylates are also easily obtainable as a commercially available product. Examples of commercially available (poly)ester (meth)acrylates include EBECRYL 450, EBECRYL 810, EBECRYL 811, EBECRYL 812, EBECRYL 1830, EBECRYL 846, EBECRYL 851, EBECRYL 852, EBECRYL 853, EBECRYL 1870, EBECRYL 884, EBECRYL 885 and the like, made by DAICEL-ALLNEX LTD., can be mentioned as commercially available (poly) ester (meth)acrylates.

A (poly)carbonate (meth)acrylate means a compound having one or more carbonate groups, and having one or more (meth)acrylate groups.

As the synthesis methods of (poly)carbonate (meth)acrylate, a dehydrochlorination reaction of (meth)acrylic acid chloride with polycarbonate polyol, a direct dehydration reaction of (meth)acrylic acid with (poly)carbonate polyol, and an ester exchange reaction of lower alkyl esters of (meth)acrylic acid with (poly)carbonate polyol, and the like may be utilized.

A hydrogenated polybutadiene (meth)acrylate means a compound having a hydrogenated polybutadiene structure and a (meth)acrylate structure in a molecule. As the synthesis methods of hydrogenated polybutadiene (meth)acrylate, preferably utilized are: an esterification reaction of hydrogenated polybutadiene polyol with (meth)acrylic acid; an ester exchange reaction of hydrogenated polybutadiene polyol with (meth)acrylic acid ester; an addition reaction of hydrogenated polybutadiene polyol with isocyanato group-containing (meth)acrylate; an addition reaction of hydrogenated polybutadiene polyol, polyisocyanate, with an alcoholic hydroxyl group-containing (meth)acrylate.

Hydrogenated polybutadiene (meth)acrylates are also easily obtainable as a commercially available product. Examples of commercially available hydrogenated polybutadiene (meth)acrylates include NISSO-PB TEAI-1000, made by Nippon Soda Co., Ltd., which is an addition product of a hydrogenated polybutadiene polyol, polyisocyanate, and an alcoholic hydroxyl group-containing acrylate; and SPBDA-S30, made by Osaka Organic Chemical Industry Ltd., which is a hydrogenated polybutadiene diacrylate.

Amongst the hydrogenated polybutadiene (meth)acrylates, preferable are esterified products of hydrogenated polybutadiene polyol having no urethane bond and (meth)acrylic acid, and ester exchange reaction products of hydrogenated polybutadiene polyol with a (meth)acrylate.

The (poly)ether (meth)acrylate means a compound having one or more ether bonds, and having one or more (meth)acrylate groups in a molecule. Examples thereof include polyethylene glycol diacrylate, polypropylene glycol diacrylate, and polytetramethylene glycol diacrylate.

The (poly)urethane (meth)acrylate means a compound having one or more urethane bonds, and having one or more (meth)acrylate groups in a molecule. Examples thereof include a compound obtainable by carrying out a polyaddition reaction using polyol, polyisocyanate, and a hydroxy group-containing (meth)acrylate, as essential materials, and a compound obtainable by carrying out a polyaddition reaction using polyol and an isocyanato group-containing (meth)acrylate, as essential materials.

If the thiol-ene curable composition of the present embodiment comprises the radical reactive compound (D), the content thereof is preferably as follows, from the perspective of elongation properties. Namely, when the total amount of the compound (A), the compound (a), the compound (B), the compound (b), and the radical reactive compound (D) is taken as 100 parts by weight, the content of the radical reactive compound (D) therein is preferably 50 parts by weight or less, and more preferably 30 parts by weight or less. If the content of the radical reactive compound (D) is within the numerical value range, the effect of improving the mechanical properties of the cured product is sufficiently exhibited while maintaining the elongation properties and elasticity of the thiol-ene curable composition.

### <Polymerization inhibitor>

The thiol-ene curable composition of the present invention may contain a polymerization inhibitor as necessary in order to improve the preservation stability.

Examples of the polymerization inhibitor include 4-methoxy-1-naphthol, 1,4-dimethoxy naphthalene, 1,4-dihydroxy naphthalene, 4-methoxy-2-methyl-1-naphthol, 4-methoxy-3-methyl-1-naphthol, 1,4-dimethoxy-2-methyl naphthalene, 1,2-dihydroxy naphthalene, 1,2-dihydroxy-4-methoxy naphthalene, 1,3-dihydroxy-4-methoxy naphthalene, 1,4-dihydroxy-2-methoxy naphthalene, 1,4-dimethoxy-2-naphthol, 1,4-dihydroxy-2-methyl naphthalene, pyrogallol, methyl hydroquinone, tertiary butyl hydroquinone, 4-methoxy phenol, and aluminum N-nitroso-N-phenylhydroxyamine. These may be utilized alone, or may be utilized in combination of two or more kinds. Preferable as the polymerization inhibitor are methyl hydroquinone, pyrogallol, and tertiary butyl hydroquinone, particularly from the perspective of preservability of the thiol-ene curable composition.

Although there is no particular limitation on the content of the polymerization inhibitor, from the perspective of preservation stability of the present composition, it is preferably less than 0.1 parts by weight, and more preferably 0.0001 to 0.05 parts by weight, when the amount obtained by subtracting the amounts of the polymerization initiator (C) and the components which do not contribute to the reaction, such as non-reactive solvents, inorganic fillers and pigments, from the total amount of the thiol-ene curable composition is taken as 100 parts by weight. If the content of the polymerization inhibitor is within the numerical value range, a sufficient curing rate is obtainable, and the preservation stability of a formulation is enhanced.

### <Other components>

In addition to the compound (A), the compound (a), the compound (B), the compound (b), the polymerization initiator (C), the radical reactive compound (D), and the polymerization inhibitor, other components may be contained in the thiol-ene curable composition of the present invention, within the scope which does not impair the objective of the present invention.

The thiol-ene curable composition of the present invention may either contain a solvent or not contain a solvent, and preferably does not contained a solvent.

Examples of the other components which are preferably contained include carbon materials, color materials such as pigments, and dyes, and inorganic fillers.

Examples of the carbon material include carbon black, acetylene black, and graphite.

Examples of the pigments include black pigments such as iron black, aniline black, cyanine black, and titanium black. Moreover, the composition of the present invention may contain organic pigments of red, green, blue and the like. For example, commercially available pigments for gel nails or UV crafts may be utilized. Examples of such pigments include PikaAce colored pigments (701, 731, 741, 755, 762), and transparent pigments (900, 901, 910, 920, 921, 922, 924, 930, 932, 941, 942, 945, 947, 950, 955, 957, 960, 963, 968, 970, 980, 981, 982, 985).

Examples of the dyes include direct dyes, acidic dyes, basic dyes, mordant dyes, acidic mordant dyes, vat dyes, disperse dyes, reaction dyes, fluorescent whitening dyes, and plastic dyes. The dye means a substance having solubility with a solvent or compatibility with a resin, and having the property of coloring the substance being dissolved or compatible.

The color material may be utilized alone, or in combination of two or more kinds.

Although there is no particular limitation on the content of color materials in the composition of the present invention, if the concentration is too thick, the transmittance of the photoactive energy rays could be reduced and to cause poor curing. Thus, the content of color materials in the composition is preferably 0.0001 to 40 % by weight.

There is no particular limitation on the inorganic fillers as long as they disperse in the thiol-ene curable composition to form a paste. For example, silica (SiO₂), alumina (Al₂O₃), titania (TiO₂), tantalum oxide (Ta₂O₅), zirconia (ZrO₂), silicon nitride (Si₃N₄), barium titanate (BaO•TiO₂), barium carbonate (BaCO₃), lead titanate (PbO• TiO₂), lead zirconate titanate (PZT), lead lanthanum zirconate titanate (PLZT), gallium oxide (Ga₂O₃), spinel (MgO• Al₂O₃), mullite (3Al₂O₃•2SiO₂) cordierite (2MgO•2Al₂O₃/5SiO₂), talc (3MgO•4SiO₂•H₂O), aluminum titanate (TiO₂-Al₂O₃), yttria-containing zirconia (Y₂O₃-ZrO₂), barium silicate (BaO•8SiO₂), boron nitride (BN), calcium carbonate (CaCO₃), calcium sulfate (CaSO₄), zinc oxide (ZnO), magnesium titanate (MgO• TiO₂), barium sulfate (BaSO₄), organic bentonite, carbon (C), glass powder, synthetic mica, reinforcing fiber material such as boron nitride fiber, powdered fillers where silicone oil was formulated into inorganic carrier, or pulverized fillers of silicone resin or silicone rubber may be utilized as such inorganic fillers, where one kind may be utilized, or two or more kinds may be utilized.

Amongst the inorganic fillers exemplified in the aforementioned, microparticle silica is preferable from the perspective of viscosity adjustment of the present composition, as well as sheet moldability of the cured product formed from the present composition. Microparticle silica is obtainable from Nippon Aerosil Co., Ltd. under the brand name Aerosil™. Examples of the microparticle silica under the brand name Aerosil™ include Aerosil™ OX50, RX50, RY50, 50, NAX50, NY50, NA50H, NA50Y, 90G, NX90G, 130, R972, RY200S, 150, R202, 200, R974, R9200, RX200, R8200, RY200, R104, RA200H, RA200HS, NA200Y, R805, R711, R7200, 300, R976, R976S, RX300, R812, R812S, RY300, R106, 380, P25, T805, P90, NKT90, AluC, and AluC805. The amount of the inorganic fillers is not particularly limited, but from the perspective of moldability of the cured product formed from the present composition, is preferably less than 10 % by weight, and more preferably 2 to 6 % by weight with respect to the total amount of the thiol-ene curable composition.

In addition to the color materials, the thiol-ene curable composition of the present invention may contain the other components such as (e1) thermoplastic resin; (e2) deodorant; (e3) adherence improving agent such as a silane coupling agent or a titanium coupling agent; (e4) oxidation inhibitors such as hindered amines, hydroquinones, and hindered phenols; (e5) ultraviolet ray absorbing agents such as benzophenones, benzotriazoles, salicylic acid esters, and metal complex salts; (e6) stabilizers such as metal soaps, inorganic and organic salts of heavy metals (e.g. zinc, tin, lead, cadmium etc.), and organic tin compounds; (e7) pH adjusters, for example, aliphatic carboxylic acids such as acetic acid, acrylic acid, palmitic acid, oleic acid, and mercapto carboxylic acid and aromatic organic acids such as phenol, naphthol, benzoic acid, and salicylic acid; (e8) plasticizers such as phthalic acid ester, phosphoric acid ester, fatty acid ester, epoxidized soybean oil, castor oil, and liquid paraffin alkyl polycyclic aromatic hydrocarbon; (e9) waxes such as paraffin wax, micro crystalline wax, polymerized wax, beeswax, spermaceti, and low molecular weight polyolefin; (e10) non-reactive diluents such as benzyl alcohol, tar, and bitumen; (e11) fillers such as acryl resin powder and phenol resin powder; (e12) foaming agents; (e13) dehydrating agents such as silane coupling agent, monoisocyanate compound, and carbodiimide compound; (e14) antistatic agents; (e15) antimicrobial agents; (e16) antifungal agents; (e17) viscosity adjusting agents; (e18) fragrance; (e19) flame retardant; (e20) levelling agents; (e21) sensitizers; and (e22) dispersants. These other components may be utilized alone, or two or more may be utilized in combination of any ratio.

### [Preparation of thiol-ene curable composition]

The composition of the present invention can be prepared by suitably mixing the compound (A), the compound (B), and other components as necessary.

There is no particular limitation on the preparation method of the composition of the present invention as long as the components can be mixed and dispersed. Examples of the preparation method include the following methods:
(i) kneading each component with a stirring rod, spatula, or the like in a suitable vessel such as a glass beaker, a can, a plastic cup, and an aluminum cup;
(ii) kneading each component with a double helical ribbon blade, a gate wing, or the like;
(iii) kneading each component with a planetary mixer;
(iv) kneading each component with a bead mill;
(v) kneading each component with a three roll mill;
(vi) kneading each component with a kneading extruder; and
(vii) kneading each component with a planetary centrifugal mixer.

The adding and mixing of each component can be carried out in any order, where all components may be added at the same time, or added consecutively.

When using the polymerization initiator (C), the handling and mixing of the components and the process before curing may be carried out under conditions where the polymerization initiator (C) does not take action prior to the curing process, i.e., may be carried out under lighting through a filter eliminating the absorption wavelength at which a photopolymerization initiator decomposes, or under non-irradiation of active energy rays, or may be carried out at, or lower than, the temperature at which the thermal polymerization initiator takes effect.

### [Curing method of thiol-ene curable composition]

The curing method is suitably selected depending on the polymerization initiator to be utilized. When using a photopolymerization initiator on the composition of the present invention, a cured product is obtainable by irradiation of active energy rays.

Ultraviolet rays, electron beams, X-rays and the like can be mentioned as the active energy rays utilized during curing, and ultraviolet rays are preferable because a low-cost apparatus may be employed.

Various light sources may be utilized as the light source when curing the composition by ultraviolet rays and include a black light, a UV-LED lamp, a high-pressure mercury lamp or a pressurized mercury lamp, a metal halide lamp, a xenon lamp, and an electrodeless discharge lamp. The black light is a lamp where a near-ultraviolet light-emitting phosphor is applied onto a special outer tube glass in which the visible light rays and ultraviolet rays of 300 nm or lower are cut, so as to emit only near-ultraviolet rays of 300 to 430 nm (peak about 350 nm). The UV-LED lamp is a lamp utilizing a light emitting diode which emits ultraviolet rays. Amongst these light sources, a high-pressure mercury lamp and an LED lamp (UV-LED lamp) are preferable from the perspective of curability.

The amount of active energy rays irradiated may be any as long as it is sufficient for curing, and can be selected depending on the composition, amount to use, thickness, shape of the cured product to be formed of the composition. For example, when irradiating ultraviolet rays to a coating layer formed by coating the composition, the amount of light exposure which may be adopted is preferably 200 to 5,000 mJ/cm², and more preferably 1,000 to 3,000 mJ/cm².

When forming a coating layer by coating the composition of the present invention on a base material, conventionally known coating (coat application) methods may be suitably adopted, including method with natural coater, curtain flow coater, comma coater, gravure coater, micro gravure coater, die coater, curtain coater, spray, dip, kiss roll, squeeze roll, reverse roll, air blade, knife belt coater, floating knife, knife over roll, or knife on blanket.

A sheet-like cured product, namely a sheet material, is obtainable by curing the composition into a sheet-like shape. The sheet material may contain materials other than the cured product as necessary.

Although the thickness of the sheet material may be suitably designed according to the uses, it is preferably 0.1 to 10 mm, and more preferably 0.3 to 8 mm, from the perspective of moldability.

### [Cured product and uses thereof]

The cured product obtainable from the composition of the present invention is excellent in elongation properties and elasticity. Therefore, it may be suitably used as a coating material, a filler material, or a molded body. Examples

The present invention is explained in further detail with the following examples. However, the present invention is not limited to these examples.

### <Compounds>

The compounds utilized in Examples 1 to 11 and Comparative Examples 1 to 9 are as follows.

### 1. Compound (A)

### 1) NR1: 1,3,5-tris(3-mercaptobutyryloxy ethyl)-1,3,5-triazine-2,4,6(1H,3H,5H)-trione

Made by Showa Denko K.K., brand name "KarenzMT™ NR1", molecular weight 568, number of mercapto groups: 3, mercapto equivalent 189

### 2) TEMPIC: 1,3,5-tris(3-mercaptopropionyloxy ethyl]-1,3,5-triazine-2,4,6(1H,3H,5H)-trione

Made by SC Organic Chemical Co., Ltd., brand name "TEMPIC", molecular weight 556, number of mercapto groups: 3, mercapto equivalent 185

### 2. Compound (a)

### 1) PEMP: pentaerythritol tetrakis(3-mercaptopropionate)

Made by SC Organic Chemical Co., Ltd., brand name "PEMP", molecular weight 531, number of mercapto groups: 4, mercapto equivalent 133

### 2) BD1: 1,4-bis(3-mercaptobutyryloxy)butane

### 3. Compound (B)

1) Diallyl maleate; reagent special grade; molecular weight 196, number of double bond groups: 3
2) Diallyl fumarate; reagent special grade; molecular weight 196, number of double bond groups: 3

### 4. Compound (b)

### DAP: Diallyl phthalate

Made by Osaka Soda Co., Ltd., brand name "DAP", molecular weight 246, number of double bond groups: 2

### 5. Polymerization initiator (C)

ESACURE KTO46: DKSH Japan K.K.

### 6. Radical reactive compound (D)

### 1) VR77: epoxy acrylate

Made by Showa Denko KK, acrylate comprising bisphenol A skeleton; number of terminal double bond groups: 2 2) UA-1013P: polyether-based urethane acrylate

### (Made by Shin-Nakamura Chemical Co., Ltd.); molecular weight 13000

### <Examples 1 to 13 and Comparative Examples 1 to 4>

Compounds whose type are shown in Table 1 were mixed in the mass ratios shown in Table 1 to obtain thiol curable compositions. In Table 1, the functional group number ratio shows (the number of mercapto groups of the compound (A)) / (the number of carbon-carbon unsaturated bonds of diallyl maleate and/or diallyl fumarate).

### <Elongation properties and elastic modulus>

A mold release PET film and a 0.2 mm silicon spacer are stacked on a glass plate in this order and filled with thiol-ene curable composition. Then, a mold release PET film and a glass plate are further stacked thereon in this order, which is then fixed with a clip. Afterwards, using a conveyor type UV irradiator ECS-4011GX (high-pressure mercury lamp) made by Eye Graphics Co., Ltd., 1 J/cm² of UV light was irradiated from both sides, thus obtaining a sheet for experiments having a thickness of 0.2 mm. The resultant sheet for experiments was cut into short strips of width 4 mm and length 50 mm, and a tensile experiment was conducted in a 23 °C environment, with a 30 mm distance between chucks, and a tensile speed of 30 mm/min to measure the elongation rate (%) and initial elastic modulus (MP) during breaking.

### Evaluation criteria

A Excellent: Elastic modulus is 1000 MPa or more, and elongation rate is 50 % or more
B Good: Elongation rate is 100 % or more, and elastic modulus is 20 MPa or more and less than 1000 MPa
C Average: Elongation rate is 100 % or more, and elastic modulus is less than 20 MPa
D Poor: Outside the aforementioned ranges

### <Preservation stability of a formulation>

Each compound was weighed by parts by weight as shown in Table 1 in a screw bottle, stirred for 30 minutes with a mix rotor at a rotation speed of 30 rpm, and then was left to stand at room temperature for 24 hours. The external appearance of the liquid was observed.

### Evaluation criteria

A Excellent: Transparent and uniform state
B Average: Non-uniform state with partial gel portions
C Poor: Solidified

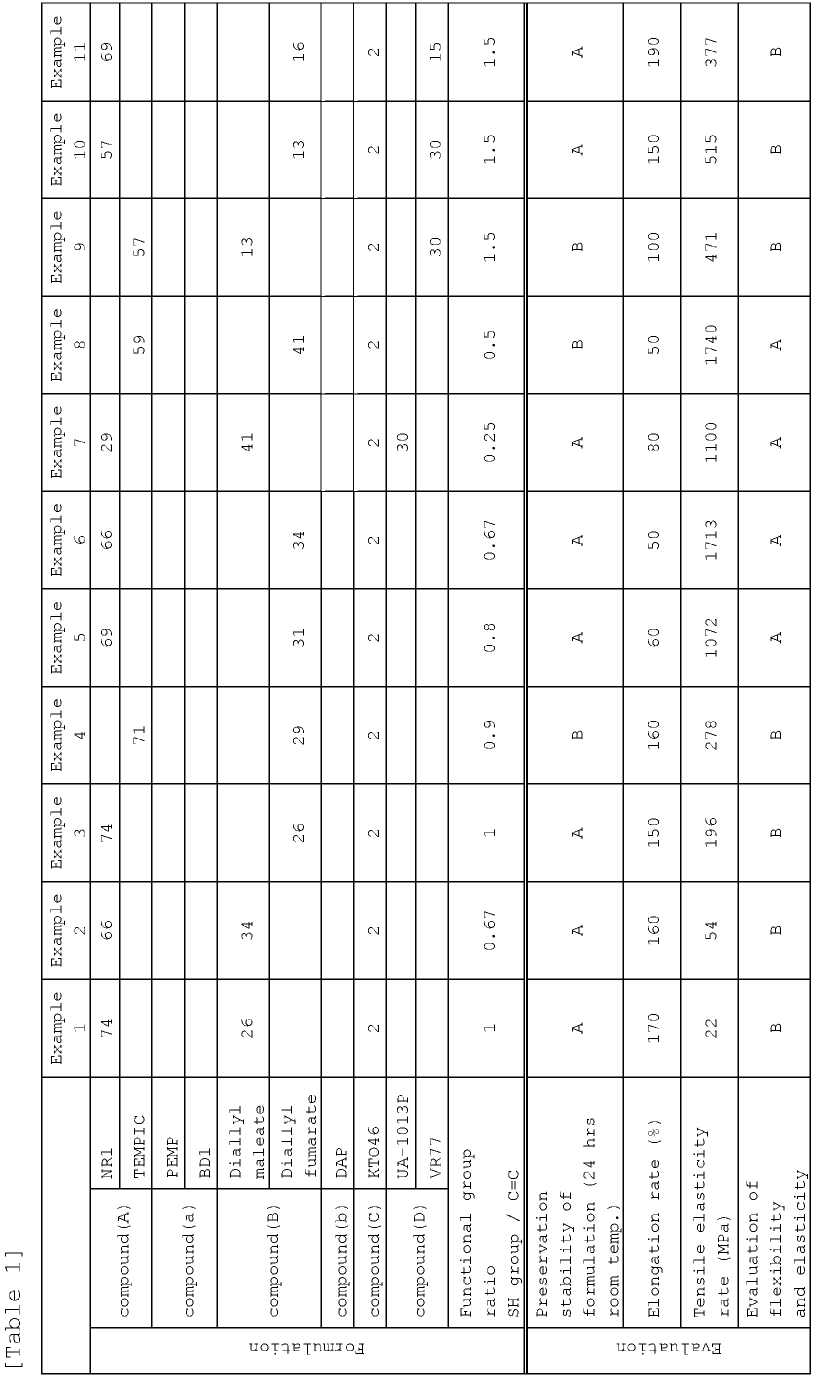

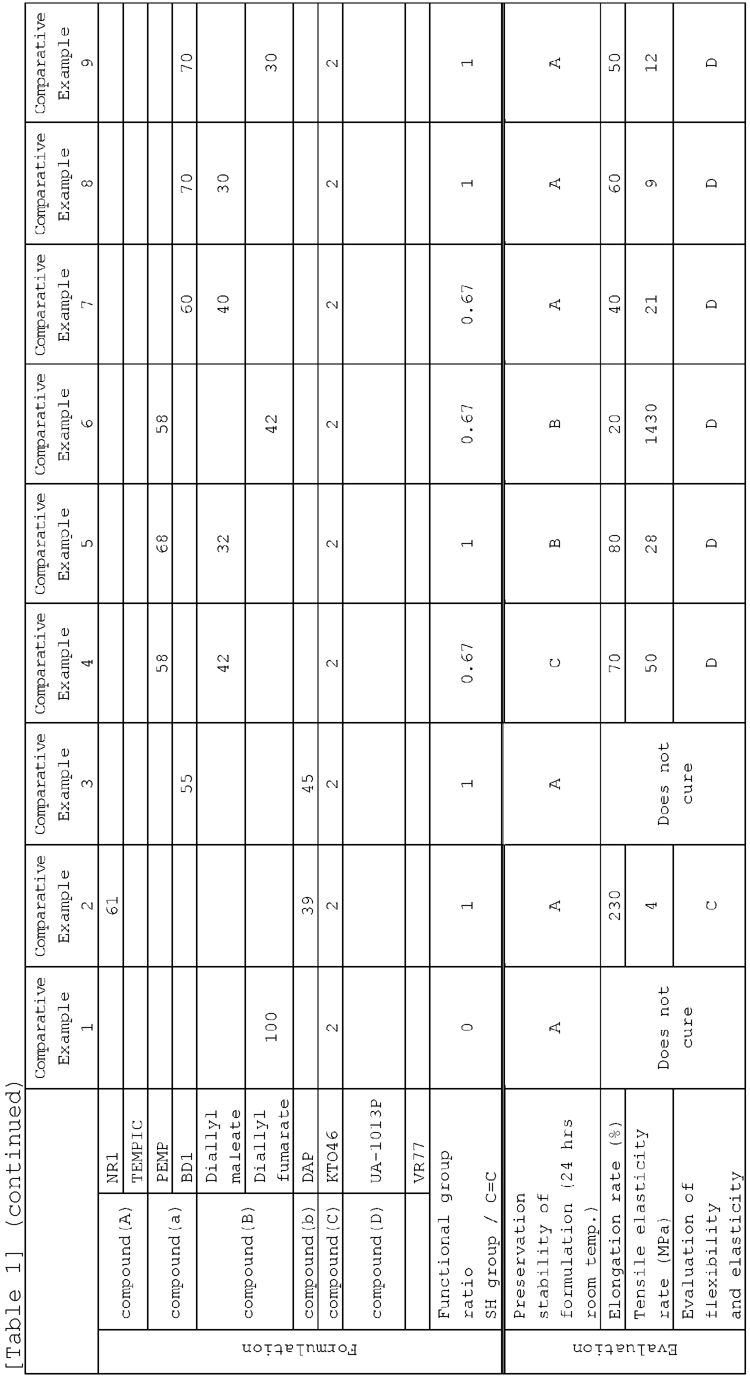

Examples 1 to 11, which are thiol-ene curable compositions characterized by comprising the compound (A) and the compound (B), exhibited both elongation properties and elastic modulus, where the evaluation was A or B. Amongst these, in Examples 1, 2, 3, 5, 6, 7, 10 and 11 where a secondary thiol is used, the preservation stability of a formulation was excellent, and was evaluated as A.

Curing was not possible in Comparative Example 1 which does not contain the compound (A), nor in Comparative Example 3 in which DAP having an allyl group at the molecular terminals but having no carbon-carbon unsaturated bond in the molecular chain, and BD1 being a bifunctional thiol compound were added.

In Comparative Example 2, which includes the compound (A) but utilizes an allyl compound other than the compound (B), a flexible cured product of elongation rate 100 % or more was obtained; however, the elastic modulus was less than 10 MPa.

Comparative Examples 4 to 9, which include the compound (B) but utilize thiols other than the compound (A), exhibited neither elongation properties nor elasticity, and hence were evaluated as D.

### Industrial Applicability

The thiol-ene curable composition of the present invention has elongation properties and elasticity, and can be easily cured by irradiation of active energy rays. Therefore, the composition is useful as a protective material against impacts. The composition can also be utilized as a mold casting material, a paint, a molding material and the like in various industries.

## Claims

1. A thiol-ene curable composition comprising a compound (A) having an isocyanuric skeleton and at least two mercapto groups in one molecule, and at least one of a compound (B) including diallyl maleate and diallyl fumarate.

2. The thiol-ene curable composition according to Claim 1, wherein the compound (A) is at least one selected from 1,3,5-tris(3-mercaptobutyryloxyethyl)-1,3,5-triazine-2,4,6(1H,3H,5H)-trione, tris-[(3-mercaptopropionyloxy)-ethyl]-isocyanurate, and tris(mercaptopropyl)isocyanurate.

3. The thiol-ene curable composition according to Claim 1, wherein the compound (A) contains a group shown by the following formula (1): 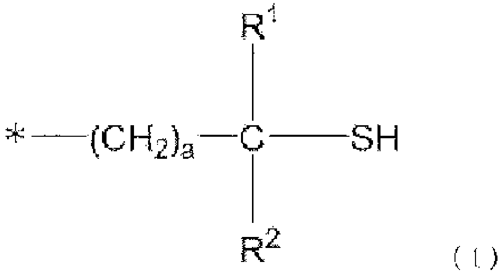 in Formula (1), the * symbol represents a bonding point, R¹ represents an alkyl group having 1 to 10 carbon atoms, R² is a hydrogen atom or an alkyl group having 1 to 10 carbon atoms, and a is an integer from 0 to 2.

4. The thiol-ene curable composition according to any one of Claims 1 to 3, wherein a ratio of the number of the mercapto groups of the compound (A) and the total number of carbon-carbon unsaturated bonds of the compound (B) (the number of mercapto groups / the number of unsaturated bond groups) is within a range of 0.2 to 2.

5. The thiol-ene curable composition according to any one of Claims 1 to 4, comprising 0.01 to 10 % by weight of a polymerization initiator (C) to a total amount of the thiol-ene curable composition.

6. The thiol-ene curable composition according to any one of Claims 1 to 5, further comprising a radical reactive compound (D).

7. A cured product of the thiol-ene curable composition according to any one of Claims 1 to 6.
